# EUROPÄISCHE PATENTANMELDUNG

(11) **EP 0 661 002 A1**
(43) Veröffentlichungstag der Anmeldung: **05.07.1995**
(21) Anmeldenummer: 94118744.5
(22) Anmeldetag: 29.11.1994
(51) Int. Cl.: A23G 3/02, A23G 1/26

(54) **Giessblech zum Modellieren von Schokolade oder ahenlichen Erzeugnissen"**

(30) Priorität: 29.12.1993 IT MI932754
(71) Anmelder: CARLE & MONTANARI S.p.A., I-20141 Milano (IT)
(72) Erfinder: Cerboni, Renzo, 20146 Milano (IT)
(74) Vertreter: Mayer, Hans Benno, Dipl.-Ing.

(57) **Zusammenfassung**

Giessblech (1) zum Modellieren von Schokolade oder aehnlichen Erzeugnissen mit von der Unterseite des Giessbleches abstehenden Vorspruengen (7,8), die ueber eine formschluessige Verbindung mit den Gaengen einer Gewindeschnecke (9) in Wirkverbindung treten, wobei die Schnecke gesteuert antreibbar ist und sich ueber die gesamte Laenge der Eintafelanlage erstreckt.

## Beschreibung

Die vorstehende Erfindung betrifft ein Giessblech, das in Eintafelanlagen fuer Schokolade oder aehnliche Lebensmittel Einsatz findet.

Es ist bekannt, dass derzeitig zum Eintafeln von Schokolade oder aehnlichen Erzeugnissen Giessbleche Verwendung finden, die im wesentlichen aus einem rechteckigen Bauteil bestehen, das aus Kunststoff hergestellt ist, wobei in der Oberflaeche Ausnehmungen vorgesehen sind, in die das spaeter noch zu behandelnde Lebensmittelerzeugnis eingegossen wird. Die anschliessende Behandlung erfolgt z.B. in einer Kuehlanlage oder in anderen Bearbeitungsstationen, die vom Stand der Technik her bekannt sind.

Bisher war es ueblich, die Giessbleche entlang einer Eintafelanlage unter Zuhilfenahme von zwei parallel zueinander angeordneten Ketten zu transportieren. Dabei waren die Ketten mit abstehenden Mitnehmern ausgeruestet, die mit den Koerpern der Giessbleche in Beruehrung traten, um die Giessbleche entlang der Eintafelanlage zu foerdern.

Der Einsatz von Ketten als Foerdermittel hat bei derartigen Anlagen den Nachteil, dass zwischen den einzelnen gefoerderten Giessblechen erhebliche Abstaende einzuhalten sind, dies um zu ermoeglichen, dass die abstehenden Foerdermittel ungehindert mit der Rueckseite des rechteckigen Giessbleches in Wirkverbindung treten koennen.

Diese Notwendigkeit fuehrt zu einer Verminderung der nutzbaren Bahnflaeche fuer das Eintafeln von Schokoladenmasse oder aehnlicher Erzeugnisse. Aus diesem Grunde muessen die bekannten Eintafelanlagen mit wesentlich laengeren und deshalb kostenaufwendigeren Transportanlagen ausgeruestet werden.

Aufgrund der Verwendung von parallel angeordneten Kettenstraengen zum Foerdern der Giessbleche in horizontaler Ebene fuehrt eine Bewegung der Giessbleche in einer vertikalen Ebene zu erheblichen technischen Schwierigkeiten. Aus diesem Grunde waren bisher immer sehr teure Hubanlagen nach Art eines "Paternosters" einzusetzen.

Diese Anlagen sind weder praktisch noch optimal einsetzbar, was den thermischen Wirkungsgrad der Anlage betrifft, z.B. eines Kuehlaggregates, in dem die Klimatisierung und das Abkuehlen der in den Giessblechen enthaltenen Erzeugnisse erfolgt.

Schliesslich weisen die bekannten Giessbleche, die unter Zuhilfenahme von parallel angeordneten Kettenstraengen gefoerdert werden, wesentliche Probleme lebensmittelhygienischer Natur auf; bei derartigen Anlagen ist es nicht auszuschliessen, dass die Giessbleche durch Schmutz oder das Schmiermittel der Ketten beeinflusst werden. Reinigungsarbeiten, besonders das Saeubern der seitlichen Flaechen des Giessbleches, auf denen sich auch eine Uebermenge des eingetafelten Erzeugnisses ablagert, sind problembehaftet oder ueberhaupt nicht durchfuehrbar.

Aufgabe der vorstehenden Erfindung ist es, ein neues Giessblech fuer Eintafelanlagen vorzuschlagen, mit dem die Nachteile des Standes der Technik vermieden werden koennen, und mit dem ein Transport des Giessbleches sowohl in einer Horizontalebene als auch in einer vertikalen Ebene ohne den Einsatz von Ketten moeglich wird, und eine Vereinfachung des Aufbaues der Eintafelanlage, ein hygienischer Eintafelvorgang und ein wirkungsvolles Abkuehlen des Ereugnisses moeglich wird und gleichzeitig ein einfaches Stapeln der Giessbleche sowie ein gesteuertes Bewegen der Giessbleche, sowohl in horizontaler Ebene als auch in vertikaler Ebene, moeglich wird.

Diese Aufgabe wird mit einem Giessblech zum Eintafeln von Schokolade oder aehnlichen Erzeugnissen dadurch moeglich, dass das Giessblech Vorspruenge aufweist, die von der Unterseite des Giessbleches abstehen und die Vorspruenge formschluessig mit den Gaengen einer Gewindeschnecke in Wirkverbindung treten und die Schnecke sich entlang der Eintafelanlage erstreckt und mit gesteuerter Bewegung antreibbar ist.

Mit besonderem Vorteil sind an den entgegengesetzten Enden des Giessbleches nach unten gerichtete Vorspruenge vorgesehen, die eine Ausnehmung begrenzen, in die Stuetzen und Fuehrungsmittel eines Giessbleches eindringen.

Es hat sich als vorteilhaft erwiesen, dass die abstehenden Vorspruenge, die an den Enden des Giessbleches vorgesehen sind, Standfuesse fuer das Giessblech bilden.

Mit besonderem Vorteil sind die entgegengesetzten Enden des Giessbleches jeweils mit einer stufenfoermigen Ausnehmung versehen, die eine Aufnahme fuer die Standfuesse eines darueberliegenden Giessbleches bildet.

Weitere Vorteile und Merkmale der Erfindung koennen der folgenden Beschreibung, den Anspruechen und den beigefuegten Zeichnungen entnommen werden.

Der Erfingungsgegenstand wird nun genauer beschrieben und anhand eines Ausfuehrungsbeispieles in den beigefuegten Zeichnungen dargestellt. Es zeigen:
Figur 1 ein Giessblech gemaess der vorstehenden Erfindung in Draufsicht;
Figur 2 das Giessblech nach Figur 1 in Ansicht und teilweise im Schnitt;
Figur 3 das Giessblech gemaess Figur 1 in einer Ansicht auf die Unterseite des Bleches;
Figur 4 ein Detail einer Vielzahl gestapelter Giessbleche;
Figur 5 in Vorderansicht mehrere uebereinandergestapelte Giessblechgruppen;
Figur 6 ein Giessblech in Vorderansicht;
Fig. 7 ein Detail der Endstuecke von Giessblechen, im Schnitt gemaess der Linie VII-VII der Figur 6;
Figur 8 das Giessblech im Schnitt entlang der Linie VIII-VIII der Figur 2;
Figur 9 das Giessblech im Schnitt entlang der Linie IX-IX der Figur 2;
Figur 10 die Enden von zwei stirnseitig zusammengefuegten Giessblechen in einer Ansicht von unten.

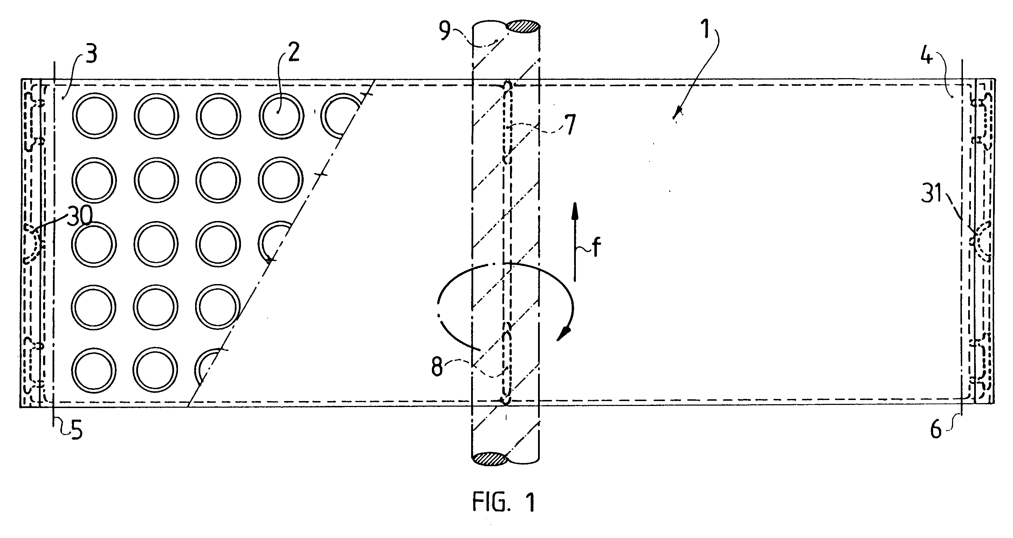

Wie der Figur 1 zu entnehmen ist, besteht das erfindungsgemaess ausgebildete Giessblech 1 aus einem rechteckigen Koerper, der in vorteilhafter Weise aus geeignetem Kunststoff hergestellt wird, z.B. Polycarbonat.

In der nach oben gerichteten Flaeche nimmt das Giessblech 1 Hohlraeume 2 auf, in die Schokolade oder ein aehnliches fluessig-teigiges Material eingefuellt wird.

Das Giessblech liegt mit den Kopfenden 3 und 4 auf parallelen Fuehrungen 5 und 6, die z.B. aus Rundmaterial bestehten. Die Fuehrungen dienen als Auflager und als Fuehrungsmittel fuer die Giessbleche 1. Um das Giessblech mit gesteuerter Bewegung in Richtung der Pfeiles (f) bewegen zu koennen, stehen vom Boden eines jeden Giessbleches 1 nach unten gerichtete Vorspruenge 7 und 8 ab, die mit den Gaengen einer Antriebsschnecke 9 in Wirkverbindung stehen. Die Antriebschnecke 9 ist z.B. mit einem steuerbaren Motor wirkverbunden.

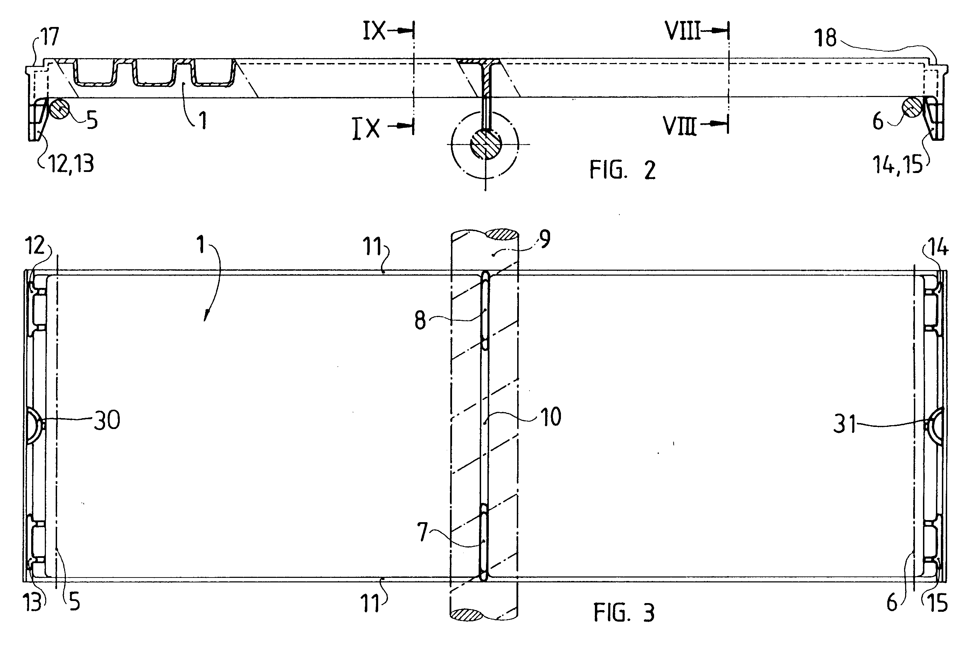

Den Figuren 2 und 3 kann entnommen werden, dass die Vorspruenge 7 und 8 in vorteilhafter Weise von einer quer angeordneten Rippe 10 des Giessbleches abstehen. Diese Rippe ist in vorteilhafter Weise einstueckig mit einer Verstaerkungsleiste 11, die am Umfang des Giessbleches 1 angeformt ist, verbunden, um somit den Aufbau des Giessbleches 1 schachtelartig zu verrippen und zu versteifen.

Der Figur 3 kann entnommen werden, dass die Vorspruenge 7 und 8 in vorteilhafter Weise trapezfoermig ausgebildet sind und sich nach unten verjuengen. Aus diesem Grunde ist auch das Gewinde der Schnecke 9 als Trapezgewinde ausgebildet, das geeignete Steigung aufweist.

Um eine einwandfreie Fuehrung der Giessbleche 1 zu ermoeglichen, liegen diese mit sich entgegengesetzten, schmaleren Enden auf Fuehrungen 5 und 6 auf, die sich ueber die gesamte Laenge der Eintafelanlage erstrecken. In vorteilhafter Weise sind die Fuehrungen 5, 6 als Rundmaterial ausgebildet (Strichpunktlinie). Dadurch wird eine genaue Fuehrung der Giessbleche bei einem Minumum an Reibung moeglich. Ferner werden durch Vorsehung solcher Fuehrungen 5, 6 die Reinigungsarbeiten der Fuehrungen vereinfacht.

Von den Enden des Giessbleches 1 stehen nach unten Standfuesse 12, 13, 14, 15 ab.

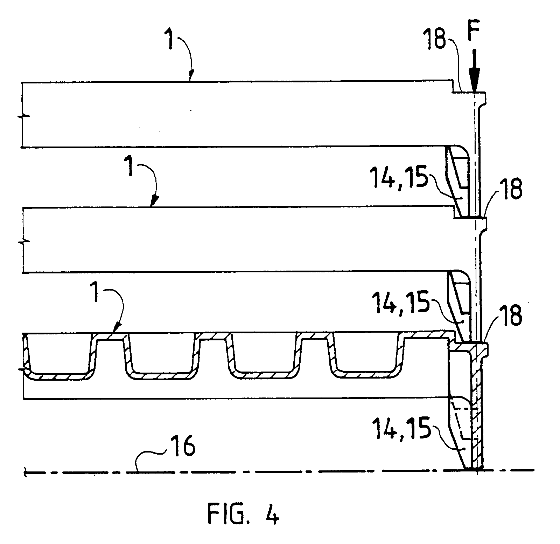

Die Standfuesse 12, 13, bzw. 14, 15 bilden auch ein seitliches Begrenzungsteil des Giessbleches gegenueber den Fuehrungen 5, 6. Ferner, wie der Figur 4 zu entnehmen ist, bilden die Standfuesse 12, 13 und 14, 15 ein robustes Auflageteil zum Abstelen des Giessbleches 1 auf einer Auflageebene 16 oder auf einem darunterliegenden Giessblech, wenn die Giessbleche 1 uebereinandergestapelt sind, um eine saeulenartige Anordnung zu bilden. In diesem Fall werden saemtliche auftretenden Kraefte F sicher in das Gebilde der Standfuesse 12, 13, 14, 15 eingeleitet und unerwuenschte Lageungenauigkeiten und Durchbiegungen des Giessbleches 1 vermieden.

Mit besonderem Vorteil weisen die Kopfenden eines jeden Giessbleches 1 eine Ausnehmung 17 bzw. 18 auf. In vorteilhafter Weise hat die Ausnehmung die Gestalt einer Stufe und dient zur Bildung einer genau definierten Ausnehmung zur Aufnahme der Standfuesse 12, 13, 14, 15 eines darueberliegenden Giessbleches. Somit wird fuer einen saeulenartigen Stapel, bestehend aus mehreren uebereinander angeordneten Giessblechen 1, groesstmoegliche Genauigkeit in der Lagezuordnung der Giessbleche 1, sowie groesstmoegliche Stabilitaet des Stapels gewaehrleistet.

In vorteilhafter Weise weisen die vom Giessblech 1 abstehenden Standfuesse 12, 13, 14, 15 verrippten Aufbau auf, um damit die Steifigkeit und Widerstandsfaehigkeit der Giessbleche gegen mechanische Belastung zu verbessern.

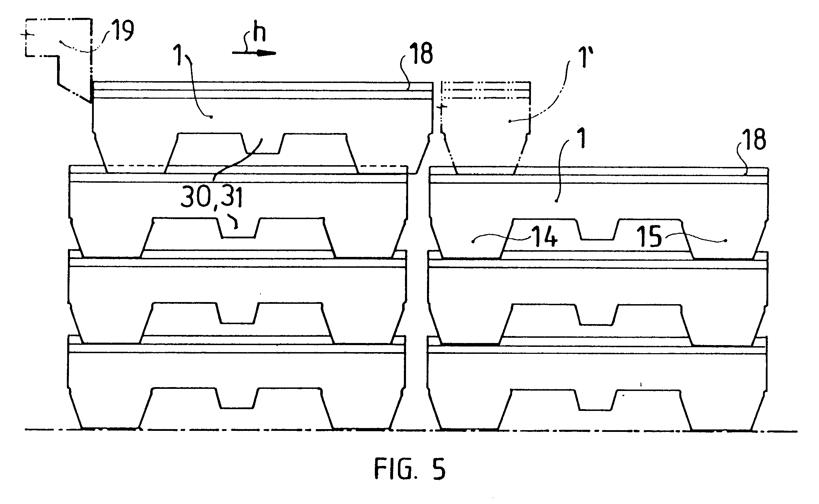

Die stufenartige Ausnehmung 17, 18, die an der Schmalseite des Giessbleches 1 vorgesehen ist, sowie die besonders robuste Ausfuehrung der Standfuesse 14, 15 ermoeglicht es, die Giessbleche turmartig in einzelnen Stapeln oder in nebeneinander angeordneten Stapeln mit gleicher Hoehe anzuordnen. Dadurch wird die Moeglichkeit geschaffen, jeweils das oberste Giessblech 1 eines Stapels in einer horizontalen Ebene, z.B. unter Zuhilfenahme einer Verschiebeeinrichtung 19 zu verschieben und somit die Bewegung eines Giessbleches 1 in Richtung der Pfeiles (h) von einem Giessblechstapel zu einem daneben angeordneten Giessblechstapel zu ermoeglichen. Dies ist schematisch mit Strichpunktlinien 1' in Fig. 5 dargestellt.

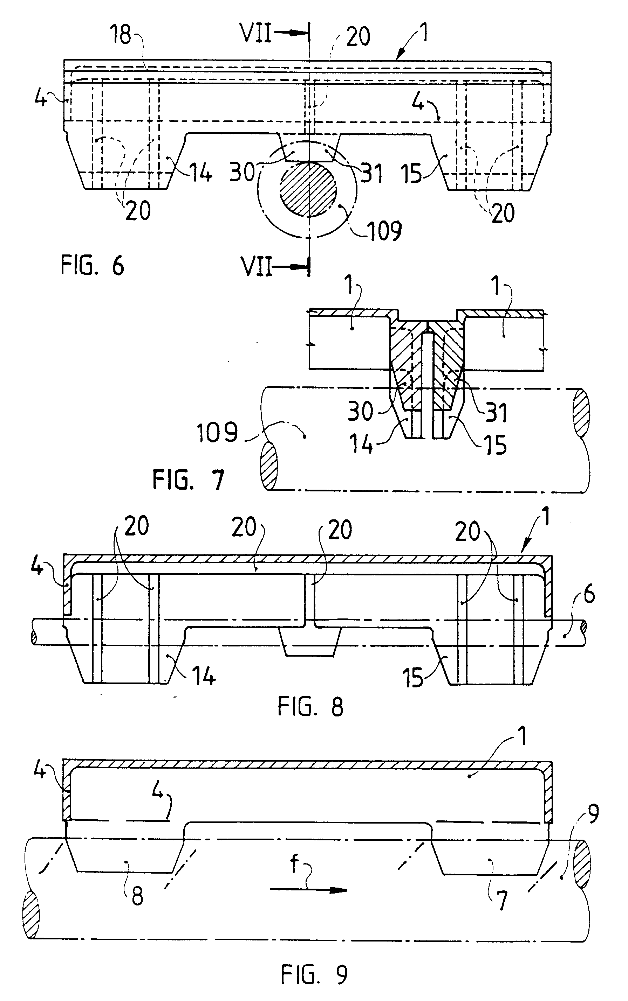

Der Figur 6 kann ein Giessblech 1 in Ansicht auf die Schmalseite, zusammen mit einer Transportschnecke, die mit Strichpunktlinien dargestellt ist, entnommen werden. Des weiteren kann der Figur 6 die Umfangsleiste 4 des Giessbleches 1 sowie die Anordnung der Verstaerkungsrippen 20 der Standfuesse 14, 15 entnommen werden, die dem Giessblech 1 die gewuenschte Steifigkeit verleihen. Ferner kann der Figur 6 deutlich die Ersteckung der stufenfoermigen Ausnehmung 18 entnommen werden.

Da das Giessblech 1 durch Rippen 20 verstaerkt ist, wird eine besonders leichte Bauweise bei sehr stabilem Giessblech 1 moeglich. Das Giessblech 1 kann die mechanischen Belastungen, die sich waehrend seines Einsatzes ergeben, gut aufnehmen.

Figur 7 zeigt in einem Detail und im Schnitt die schmaleren Enden des Giessbleches 1 in sich gegenueberliegender Stellung. Zwischen den Standfuessen 14 und 15 steht vom Ende eines jeden Giessbleches 1 eine als halbes Bauteil ausgebildete Verlaengerung 30 bzw. 31 ab.

Wenn diese, als Halbteile ausgebildeten Verlaengerungen 30 und 31 zusammengefuegt werden, entsteht ein mittig angeordnetes, konisch ausgebildetes Bauteil, mit dem die Gewindegaenge einer Schnecke 32 in Wirkverbindung treten koennen. Die Gewindeschnecke 32 ist fuer den Quertransport des Giessbleches 1 vorgesehen, wenn z.B. entlang der Foerderstrecke der Anlage eine abgewinkelte Umlenkung des Giessbleches vorzunehmen ist.

Figur 8 zeigt das Giessblech 1 in einem Schnitt entlang der Linie VIII-VIII der Figur 2.

Deutlich kann die in Umfangsrichtung laufende Leiste 4 entnommen werden, die die ebene Flaeche des Giessbleches 1 umlaeuft. Ferner koennen die Verstaerkungsrippen 20, die Standfuesse 14 bzw. 15 sowie die mit Strichpunktlinien dargestellte Fuehrungsstange 6 entnommen werden.

Figur 9 zeigt schematisch das Giessblech 1 im Schnitt entlang der Linie IX-IX der Figur 2.

Zusaetzlich zu der in Umfangsrichtung verlaufenden Verstaerkungsleiste 4 koennen die abstehenden Bauteile 7 und 8 der Zeichnung entnommen werden, die in vorteilhafter Weise konische Form aufweisen und sich nach unten verjuengen.

Die Vorspruenge 7 und 8 stehen mit den Gewindegaengen der Foerderschnecke 9 in Wirkverbindung. Sobald die Foerderschnecke in Drehbewegung versetzt wird, wird das Giessblech 1 in Richtung des Pfeiles (f) gefoerdert.

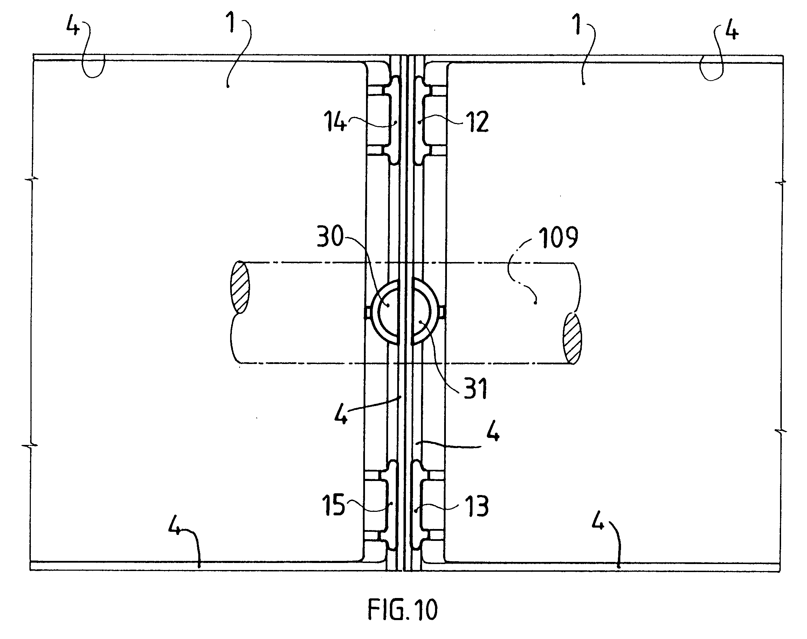

Der Figur 10, die schematisch zwei in gegenseitigem Anschlag stehende Giessblechenden darstellt, koennen die Umfangsleiste 4 sowie die Standfuesse 14 und 15 bzw. 12 und 13 entnommen werden.

In vorteilhafter Weise sind die Standfuesse 12, 13, 14, 15 als rippenartiger Koerper ausgebildet, um somit dem Giessblech bei leichter Bauweise groesstmoegliche Steifigkeit und Stabilitaet zu verleihen.

Der Figur 10 koennen auch die als Halbkoerper ausgebildeten Verlaengerungen 30 und 31 entnommen werden, die, bei mit ihren Enden zusammengefuegten Giessblechen 1 (Figur 10), einen einzigen, kegelstumpfartigen Koerper bilden, der nach Eintreten in die Gaenge der Schnecke 109 fuer den Quertransport ein Querverschieben der Giessbleche 1 erlaubt. Dadurch wird vermieden, dass die Giessbleche 1 ihren gegenseitigen, genau einzuhaltenden Abstand veraendern.

## Patentansprüche

1. Giessblech (1) zum Eintafeln von Schokolade oder aehnlichen Erzeugnissen, mit Hohlraeumen (2) in der Oberflaeche des Giessbleches (1) zur Aufnahme des zu behandelnden Erzeugnisses, **dadurch gekennzeichnet**, dass das Giessblech (1) Vorspruenge (7, 8) aufweist, die von der Unterseite des Giessbleches (1) abstehen, dass die Vorspruenge (7, 8) ueber formschluessige Verbindung mit den Gaengen einer Gewindeschnecke (9) in Wirkverbindung treten und die Schnecke (9) sich ueber die gesamte Laenge der Eintafelanlage erstreckt und mit gesteuerter Bewegung antreibbar ist.

2. Giessblech nach Patentanspruch 1, **dadurch gekennzeichet**, dass an den sich gegenueberliegenden Enden des Giessbleches (1) Standfuesse (12, 13, 14, 15) vorgesehen sind, die nach unten gerichtet sind, und eine Ausnehmung begrenzen, die Fuehrungen (5, 6) zum Aufliegen und Fuehren des Giessbleches (1) aufnehmen.

3. Giessblech nach Patentanspruch 2, **dadurch gekennzeichet**, dass die an den Enden des Giessbleches (1) vorgesehenen Verlaengerungen Standfuesse (12, 13, 14, 15) zum Abstuetzen des Giessbleches (1) bilden.

4. Giessblech nach Patentanspruch 2, **dadurch gekennzeichet**, dass jedes Ende des Giessbleches (1), das ueber den Standfuessen (12, 13, 14, 15) zum Abstuetzen des Bleches vorgesehen ist, eine stufenartige Ausnehmung (17, 18) aufweist, die eine Ausnehmung fuer Standfuesse (12, 13, 14, 15) eines darueber angeordneten Giessbleches (1') bildet.

5. Giessblech nach Patentanspruch 1, **dadurch gekennzeichet**, dass die Vorspruengen (7, 8), die vom Koerper des Giessbleches (1) nach unten abstehen, mit einer Querrippe (10) verbunden sind, die einstueckig mit einer Versteifungsleiste (11) die sich in Umfangsrichtung des Giessbleches (1) erstreckt, verbunden sind.

6. Giessblech nach Patentanspruch 1, **dadurch gekennzeichet**, dass die Vorspruenge (7, 8) konische Form aufweisen und sich nach unten verjuengen und dass die Vorspruenge (7, 8) mit den Gaengen eines Trapezgewindes einer Foerderschnecke (9) in Wirkverbindung bringbar sind.

7. Giessblech nach Patentanspruch 6, **dadurch gekennzeichet**, dass von den Schmalseiten des Giessbleches (1) als Halbkoerper ausgebildete Bauteile (30, 31) nach unten abstehen, die sich konisch nach unten verjuengen.

8. Giessblech nach Patentanspruch 3, **dadurch gekennzeichet**, dass die Standfuesse (12, 13, 14, 15) als verippte Bauteile ausgebildet sind.
